# EUROPEAN PATENT APPLICATION

(11) **EP 4 613 409 A1**
(43) Date of publication of application: **10.09.2025**
(21) Application number: 25157588.2
(22) Date of filing: 13.02.2025
(51) Int. Cl.: B23H 1/10, B23H 9/14

(54) **THROUGH FLUSH GUIDE FOR FAST HOLE DRILLING WITH ELECTRICAL DISCHARGE MACHINING SYSTEM**

(30) Priority: 07.03.2024 US 202418598147
(71) Applicant: General Electric Technology GmbH, 5400 Baden (CH)
(72) Inventor: DICOLA, Scott Steven, Parsippany, 07054 (US); ESPINOSA, Diego, Parsippany, 07054 (US)
(74) Representative: Dittmann, Rolf

(57) **Abstract**

A through flush guide (100) has a quill (104) extending from a mast (12) attached to an electrical discharge machining apparatus (10) toward a work platform. (14) An electrode (18) of the electrical discharge machining apparatus extends through the quill to the work platform. The quill includes a dielectric fluid passage around the electrode (18). A guide tip (150) on the quill receives the dielectric fluid and directs it at a focal point (F) a standoff distance (S) away from the end of the guide tip.

## Description

### TECHNICAL FIELD

The disclosure relates generally to electrical discharge machining ("EDM") systems, particularly to fast hole drilling ("FHD") with such systems, and, more particularly, to a through flush guide to improve FHD performance.

### BACKGROUND

During FHD, an EDM electrode is used to erode material from a metal workpiece in a tight circular area to create a hole in the workpiece. The electrode is fed through a guide that includes a horizontal guide body holding a vertical hollow quill positioned over the workpiece. The end of the quill stands off the workpiece, and the tip of the electrode projects toward a work site on the workpiece. A spark or plasma channel between the tip of the electrode and the workpiece converts at least some of the metal of the workpiece into plasma, eroding the material at the work site. As material is eroded, the electrode is fed into the resulting cavity to create a substantially cylindrical bore hole in the workpiece. Metal debris can collect in the hole as a result of the erosion of workpiece material and consumption of the electrode material, which can impede progress of hole formation. For example, the presence of debris can lead to arcing between the electrode and the workpiece, such as through the debris.

To reduce the collection of debris, EDM systems can include a flush arrangement in which a liquid is delivered to the hole to flood the hole and carry collected material away from the work site. Typically, a dielectric fluid, such as water or dielectric oil, is used as the flushing liquid, which will be broadly referred to herein as "dielectric fluid." It should be understood that the term "dielectric fluid" is not limited to the examples provided above but can include any suitable dielectric fluid now known or later discovered to be appropriate. Some flush arrangements employ so-called "jet flushing," also known as "side flushing," in which nozzles or apertures direct dielectric fluid at the work site. However, this is less precise in FHD than, for example, pressure flushing, also known as injection flushing. Pressure flushing is a common flushing technique in which a pressurized supply of dielectric fluid is supplied to the work site. Two main types of pressure flushing are used: through the workpiece and through the electrode ("through flushing"). In through flushing, dielectric fluid sent through the electrode exits the tip of the electrode at the work site, flooding the work site and then running out of the work site. The dielectric fluid can then carry debris out of the work site, also cooling the electrode and workpiece at the work site.

A factor in the benefit of flushing is the design of the electrode used. In through flushing, the electrode is hollow, having an outer diameter, which determines the diameter of hole the electrode can drill. The electrode can have a single channel or multiple channels through which dielectric fluid can be conveyed. However many channels the electrode has, a ratio of inner diameter to outer diameter can determine durability of the electrode and speed of drilling it can achieve. Generally, drill speed varies directly with value of the ratio, while wall thickness, electrode durability, and degree of tapering vary inversely with value of the ratio. That is, thinner walled electrodes can drill faster with less tapering, but they also wear faster than thicker walled electrodes.

In FHD, single channel electrodes are favored as producing better performance than other designs. However, prior art apparatus for through flushing in single channel electrodes can still result in more debris than is desirable remaining in the hole, particularly as the electrode nears the far surface of the workpiece in a pre-breakthrough period of machining. This reduces cutting efficiency, causing slow progress until the electrode finally breaks through the far surface of the workpiece. To try to combat this, hybrid flushing arrangements have been used to varying degrees of success. For example, through flushing combined with jet flushing can improve results. However, even hybrid systems can experience reduced cutting progress during the near-breakthrough period.

### BRIEF DESCRIPTION

All aspects, examples and features mentioned below can be combined in any technically possible way.

An aspect of the disclosure provides a through flush guide for fast hole drilling ("FHD") electrical discharge machining ("EDM"), comprising: a guide body. The guide body is in particular configured for attachment to an EDM apparatus. The guide body in particular comprises a mounting end configured for attachment to an EDM apparatus. The flush guide further comprises a quill with a hollow body having a first end and a second end opposite the first end, wherein the first end is mounted on the guide body and is configured to receive and convey an electrode of the EDM apparatus, and wherein the quill is configured to receive and convey dielectric fluid around the electrode from the first end of the quill to the second end of the quill; and a guide tip on the second end of the quill, wherein the quill and the guide tip have a common centerline, the guide tip includes an electrode passage defined along the centerline and a dielectric fluid passage defined around the electrode passage, wherein a funnel portion of the guide tip is configured to direct dielectric fluid toward a focal point located at a standoff distance away from an end of the guide tip.

Another aspect of the disclosure includes any of the preceding aspects, and wherein the guide tip has a main portion with an inner wall and an inner body, the electrode passage is defined along a center of the inner body, and the dielectric fluid passage is defined between an outer wall of the inner body and the inner wall of the main portion.

Another aspect of the disclosure includes any of the preceding aspects, and wherein the funnel portion is part of the main portion that begins a shift distance away from the end of the guide tip through which the electrode and the dielectric fluid exit, wherein an inclination of the inner wall of the main portion changes to a first angle relative to the centerline of the guide tip at the shift distance.

Another aspect of the disclosure includes any of the preceding aspects, and wherein the dielectric fluid passage is frustoconical in the funnel portion.

Another aspect of the disclosure includes any of the preceding aspects, and wherein an inclination of the outer wall of the inner body changes to a second angle relative to the centerline of the guide tip at the shift distance.

Another aspect of the disclosure includes any of the preceding aspects, and wherein the second angle and the first angle are equal.

Another aspect of the disclosure includes any of the preceding aspects, and wherein the electrode passage of the guide tip is larger at an entry thereof than at the end of the guide tip.

Another aspect of the disclosure includes any of the preceding aspects, and further comprising an electrode guide tube within and concentric with the quill, wherein the electrode guide tube is configured to receive the electrode.

Another aspect of the disclosure includes any of the preceding aspects, and wherein the end of the guide tip is configured to remain the standoff distance away from a workpiece during the FHD EDM process.

An aspect of the disclosure provides a through flush guide for FHD using an EDM apparatus, comprising: a guide body with a mounting end configured for attachment to an EDM apparatus and a distal end opposite the mounting end; a quill with a hollow body having a first end mounted on the guide body and a second end opposite the first end; a guide tip on the second end of the quill, wherein the quill and the guide tip have a common centerline; an electrode passage defined in and extending through the guide body along the centerline to exit at an end of the guide tip, the electrode passage configured to receive an electrode of the EDM apparatus; a dielectric fluid passage defined in and extending through the guide body, the quill, and the guide tip to the end of the guide tip, wherein the dielectric fluid passage surrounds the electrode passage in the quill and guide tip, and wherein a funnel portion of the guide tip defines the dielectric fluid passage to deliver dielectric fluid to a focal point located at a standoff distance from the end of the guide tip.

Another aspect of the disclosure includes any of the preceding aspects, and wherein the guide tip includes an inner wall and an inner body, and the inner wall of the guide tip together with the outer wall of the inner body define the dielectric fluid passage in the guide tip.

Another aspect of the disclosure includes any of the preceding aspects, and wherein the inner wall in the funnel portion is inclined at a first angle toward the centerline of the guide tip.

Another aspect of the disclosure includes any of the preceding aspects, and wherein a plurality of supports extend between the inner wall of the guide tip and the inner body.

Another aspect of the disclosure includes any of the preceding aspects, and wherein the dielectric fluid passage in the guide body includes a connection configured to deliver dielectric fluid to an interior of the electrode.

An aspect of the disclosure provides an electrical discharge machining (EDM) apparatus, comprising: a work platform; a mast extending above the work platform; an electrode feed system; a dielectric fluid supply; and a guide for an electrode of the EDM apparatus and including: a guide body mounted on the mast of the EDM apparatus; a quill with a hollow body having a first end mounted on the guide body and a second end opposite the first end; and a guide tip on the second end of the quill, the quill and the guide tip having a common centerline, wherein the guide body is configured to deliver an electrode from the electrode feed system to the quill and to deliver dielectric fluid from the fluid supply to the quill, wherein the first end of the quill is configured to receive and convey the electrode along the centerline to the guide tip, and the quill is configured to receive and convey the dielectric fluid around the electrode from the first end of the quill to the guide tip, and wherein the guide tip includes an electrode passage defined along the centerline configured to receive the electrode from the quill, the guide tip also includes a dielectric fluid passage defined around the electrode passage, and a funnel portion of the guide tip is configured to direct the dielectric fluid toward a focal point located at a standoff distance away from an end of the guide tip.

Another aspect of the disclosure includes any of the preceding aspects, and wherein the guide tip has a main portion with an inner wall around an inner body, the electrode passage is defined along a center of the inner body, and the dielectric fluid passage is defined between an outer wall of the inner body and the inner wall of the main portion.

Another aspect of the disclosure includes any of the preceding aspects, and wherein the funnel portion is part of the main portion that begins a shift distance away from the end of the guide tip through which the electrode and the dielectric fluid exit, wherein an inclination of the inner wall of the main portion changes to a first angle relative to the centerline of the guide tip at the shift distance.

Another aspect of the disclosure includes any of the preceding aspects, and wherein an inclination of the outer wall of the inner body changes to a second angle relative to the centerline of the guide tip at the shift distance.

Another aspect of the disclosure includes any of the preceding aspects, and wherein the second angle and the first angle are equal.

Another aspect of the disclosure includes any of the preceding aspects, and wherein the guide tip electrode passage is larger at an entry thereof than at the end of the guide tip.

Two or more aspects described in this disclosure, including those described in this summary section, may be combined to form implementations not specifically described herein.

The details of one or more implementations are set forth in the accompanying drawings and the description below. Other features, objects and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 is a schematic side illustration of an EDM apparatus using a through flush guide according to embodiments of the disclosure;
FIG. 2 is a schematic cross-sectional illustration of a through flush guide according to embodiments of the disclosure;
FIG. 3 is a schematic exploded view illustration of a through flush guide according to embodiments of the disclosure as seen in FIG. 2;
FIG. 4 is an enlarged schematic cross-sectional illustration of a guide tip of a through flush guide according to embodiments of the disclosure;
FIG. 5 is a further enlarged schematic cross-sectional illustration of the guide tip of FIG. 4 according to embodiments of the disclosure;
FIGS. 6A and 6B are schematic graphs of performance of an EDM apparatus using prior art flush arrangements; and
FIG. 6C is a schematic graph of performance of an EDM apparatus using a through flush guide according to embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the current technology, it will become necessary to select certain terminology when referring to and describing relevant machine components within the illustrative application of a through flush guide for fast hole drilling

("FHD") using electrical discharge machining ("EDM"). When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as the dielectric fluid through an EDM apparatus or through one of the EDM apparatus component systems. The term "downstream" corresponds to the direction of flow of the fluid, and the term "upstream" refers to the direction opposite to the flow (i.e., the direction from which the flow originates).

In addition, several descriptive terms may be used regularly herein, as described below. The terms "first," "second," and "third," may be used interchangeably to distinguish one component from another and are not intended to signify location or importance of the individual components.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event or circumstance may or may not occur or that the subsequently described component or element may or may not be present and that the description includes instances where the event occurs or the component is present and instances where the event does not occur or the component is not present.

Where an element or layer is referred to as being "on," "engaged to," "connected to," "coupled to," or "mounted to" another element or layer, it may be directly on, engaged, connected, coupled, or mounted to the other element or layer, or intervening elements or layers may be present. In contrast, when an element is referred to as being "directly on," "directly engaged to," "directly connected to," or "directly coupled to" another element or layer, no intervening elements or layers are present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items. The verb forms of "couple" and "mount" may be used interchangeably herein.

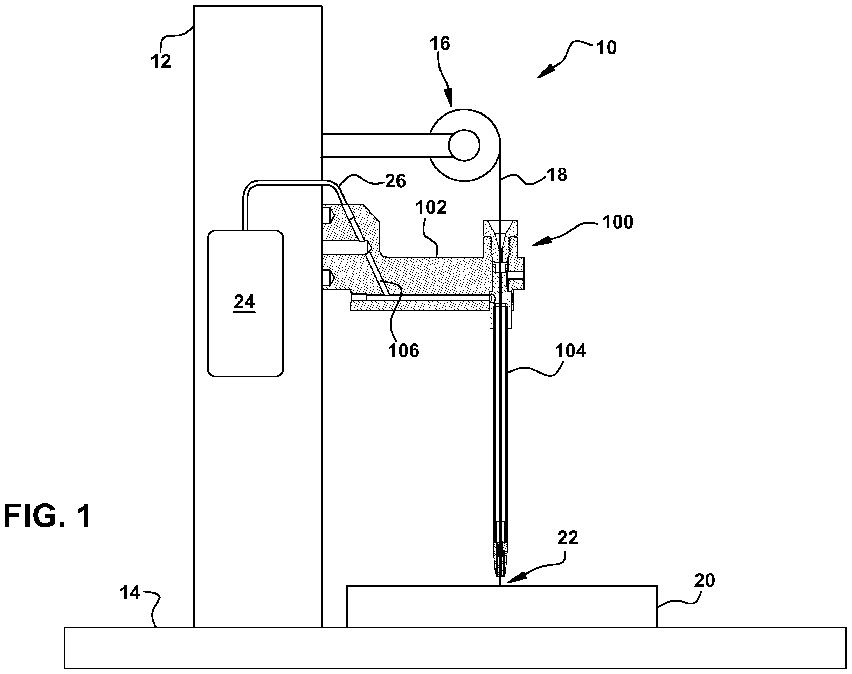

As indicated above, and with reference to the accompanying FIGS. 1 through 6C, the disclosure provides a through flush guide for FHD EDM. As seen schematically in FIG. 1, an EDM apparatus 10 can include a mast 12 extending above a work platform 14. Mast 12 can support a through flush guide 100 that is configured for attachment to mast 12. Mast 12 can also include an electrode feed system (or supply arrangement) 16 that provides an electrode 18 used for EDM on a workpiece 20 at a work site 22 thereon. As is known in the art, electrode 18 can be a solid wire or can be hollow with one or more channels extending along its length. For FHD, electrode 18 preferably has a single channel extending therethrough, though any suitable electrode configuration can be employed with embodiments as disclosed herein. As is also schematically illustrated in FIG. 1, a dielectric fluid supply 24 can be included and can be connected to through flush guide 100 via a conduit 26 or the like. For example, conduit 26 can be connected to a dielectric fluid passage 106 defined in a guide body 102 of through flush guide 100, which can then direct dielectric fluid through a quill 104 mounted on guide body 102 and to work site 22. Guide body 102 can be configured for attachment to mast 12 or another part of EDM apparatus 10 in any suitable manner known now or in the future.

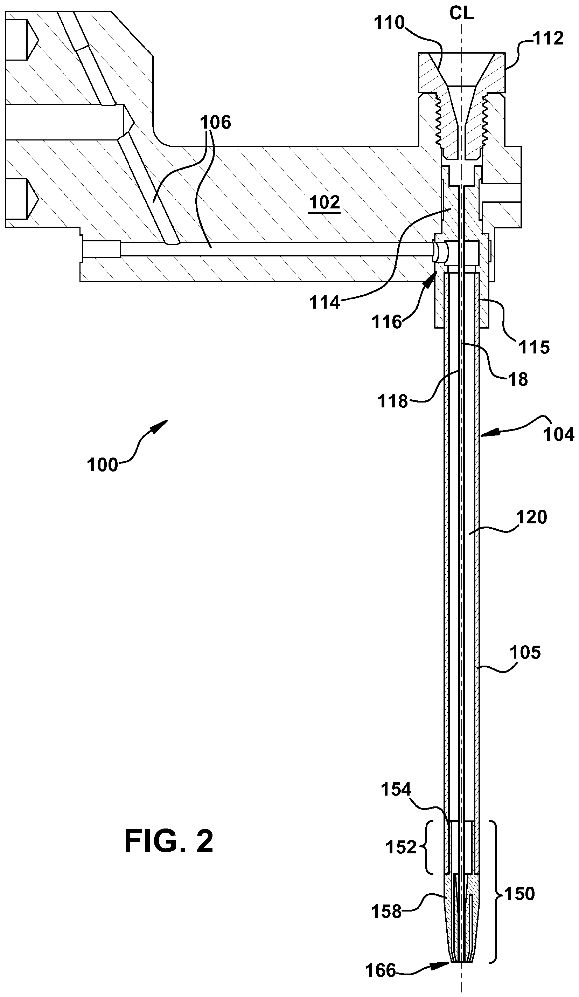

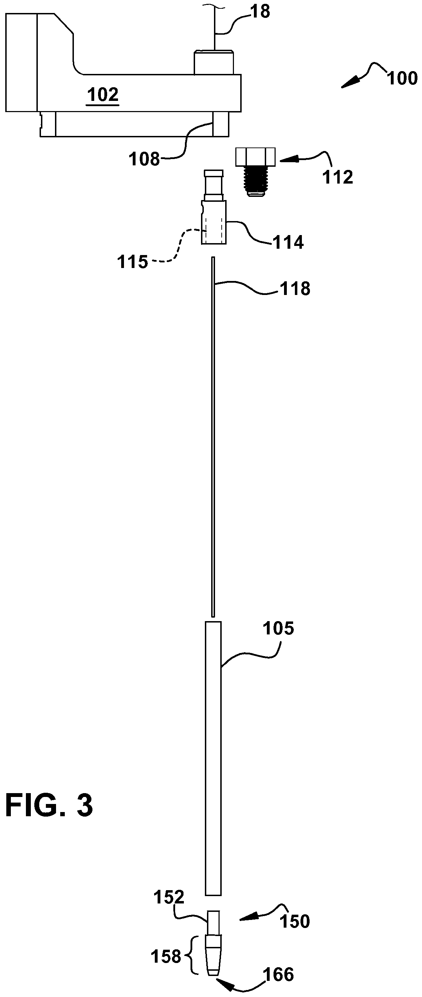

As seen in more detail in the cross-sectional view of FIG. 2 and the exploded view of FIG. 3, quill 104 includes a hollow body 105 having a first (inlet) end mounted on guide body 102 and a second (outlet) end opposite the first end. Quill 104 can be configured to receive and convey electrode 18 of EDM apparatus 10 along a centerline CL of quill 104. Guide body 102 can include an electrode receiver 110 on a top thereof, which can be a conical or frustoconical cavity formed in a head of a bolt 112 or the like. Electrode receiver 110 can have an entry defined therein that is wider than an outer diameter of electrode 18. Electrode receiver 110 can also include an electrode passage defined therein that is slightly larger than the outer diameter of electrode 18.

A spacer tube 114 can be interposed axially between bolt 112 and quill 104 and can be connected to a first end of quill 104 with corresponding threads or the like 115 formed on an interior surface of spacer tube 114 and on an exterior surface of the first end of quill 104. Spacer tube 114 may also be coupled to guide body 102 via friction fitting or by threads or the like (not shown) formed on an exterior surface of spacer tube 114 and an interior surface of electrode passage. Spacer tube 114 can include a junction 116 (FIG. 2) for dielectric fluid passage 106 and electrode passage. In embodiments, junction 116 can direct fluid from dielectric fluid passage 106 to quill 104. In other embodiments, junction 116 can also direct dielectric fluid into and/or along electrode 18. It should be understood that features of electrode receiver 110 and/or spacer tube 114 could be formed integrally with guide body 102 in embodiments.

In embodiments, quill 104 can include an electrode guide tube 118 that is concentric therewith and through which electrode 18 can extend. Whether or not quill 104 includes an electrode guide tube 118, an upper channel 120 can be defined between an inner surface of quill 104 and electrode 18. That is, quill 104 can be configured to receive and convey dielectric fluid around electrode 18 in upper channel 120 from the first end of quill 104 to a second end of quill 104 opposite the first end of quill 104. The first end of quill 104 is proximal to guide body 102 and distal to workpiece 20, while the second end of quill 104 is distal to guide body 102 and proximal to workpiece 20.

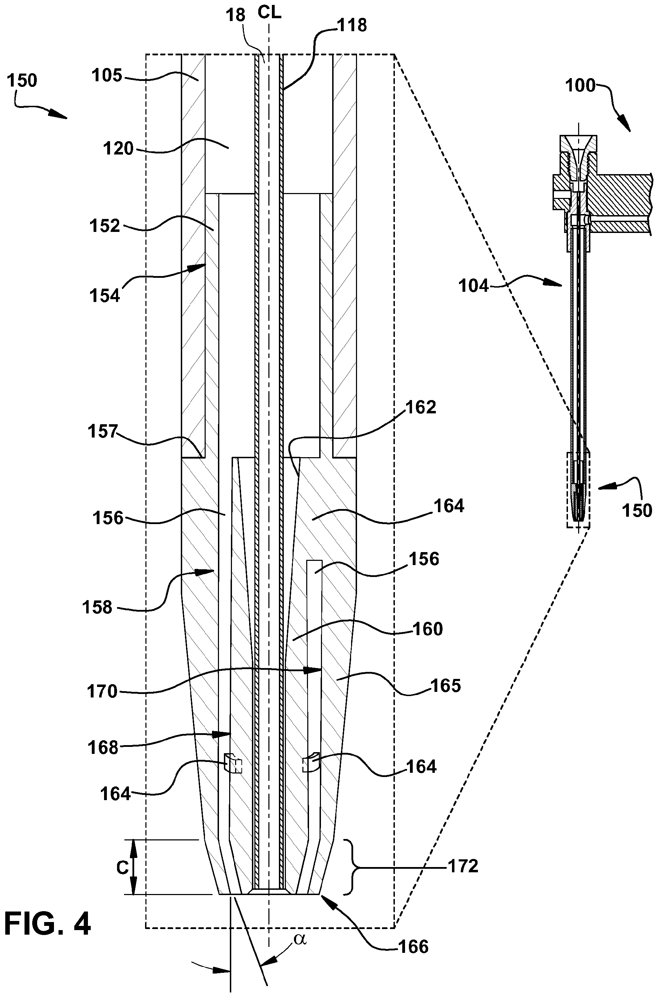

A guide tip 150 can be mounted on the second end of quill 104 via a connector portion 152 of guide tip 150, such as with threads 154 or the like. Quill 104 and guide tip 150 can have a common centerline CL, which can also be shared by electrode passage 108, electrode receiver 110, bolt 112, spacer tube 114, and electrode guide tube 118, as well as electrode 18. With additional reference to FIG. 4, guide tip 150 can include a lower channel 156 defined therein that is in fluid communication with upper channel 120 in quill 104, defined between hollow body 105 and electrode 18, or electrode guide tube 118, respectively. Dielectric fluid can thereby flow from upper channel 120 into and through lower channel 156 to an outlet end 166 of guide tip 150. Electrode 18 can pass along a center of guide tip 150, such as in an electrode passage 108 of the guide tip defined along a center thereof, wherein electrode 18 may in embodiments be guided in electrode guide tube 118 provided inside electrode passage 108 of the guide tip.Lower channel 156 thus provides a dielectric fluid passage of the guide tip defined around electrode passage 108. A main portion 158 of guide tip 150 can extend from connector portion 152 to outlet end 166 of guide tip 150. A shoulder 157 (FIG. 4) of main portion 158 can abut the second end of hollow body 105 of quill 104 when connector portion 152 is mounted on the second end of quill 104, such as when connector portion 152 is screwed into the second end of hollow body 105 with threads 154.

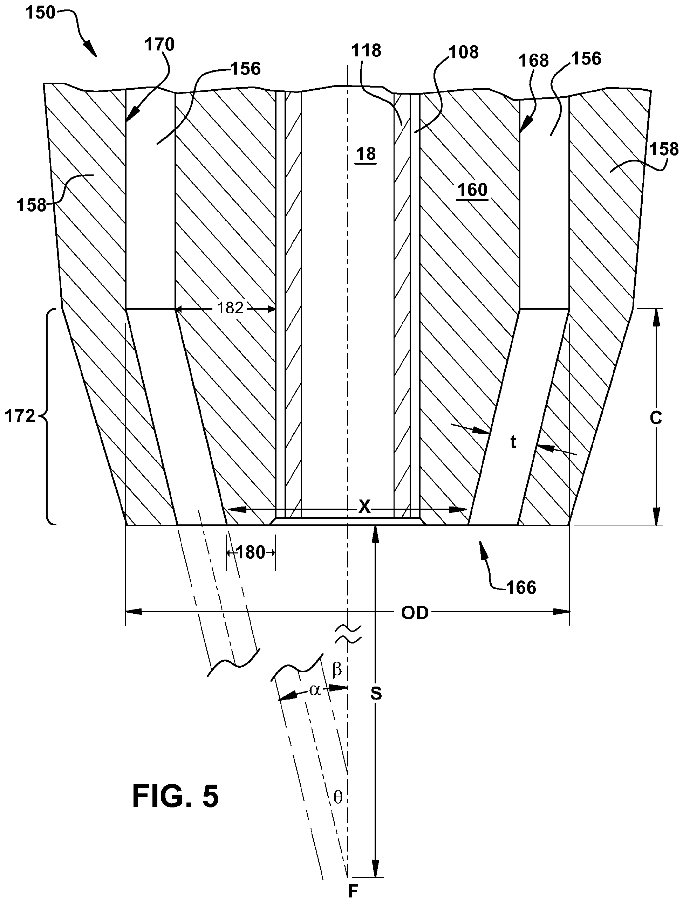

With continuing reference to FIGS. 2 and 3, and also looking at enlarged views in FIGS. 4 and 5, main portion 158 can include an inner body 160 through which electrode 18 can pass. In embodiments including inner body 160, main portion 158 can be said to constitute an outer body 165 between its external surface and an inner wall 170. Inner body 160 includes an electrode guide 162 at connector portion 152, that has an entry with an inner diameter larger than the outer diameter of electrode 18, or electrode guide tube 118, if present, and that grows smaller, i.e., tapers along the axial direction, towards an electrode passage 108 (cf. FIG. 5) of the guide tip 150. In embodiments, space is left in electrode passage 108 for electrode 18 or electrode guide tube 118 to travel. Standoffs or supports 164 can be arranged between an outer wall 168 of inner body 160 and an inner wall 170 of main portion 158 to hold inner body 160 within guide tip 150. As particularly seen in FIG. 4, multiple groups of supports 164 can be included, such as an upper group illustrated on the right side of guide tip 150 above lower channel 156 and a lower group. As shown in FIG. 4, one or more groups of supports 164 can be offset circumferentially from each other as illustrated by the lower group of supports 164 not being in cross-section, while the upper support 164 is in cross-section. Together, outer wall 168 of inner body 160 and inner wall 170 of main portion 158 can define lower channel 156 in main portion 158.

As is particularly seen in FIG. 4 and especially in additionally enlarged FIG. 5, a funnel portion 172 of main portion 158 can begin a shift distance C away from outlet end 166 of guide tip 150. At shift distance C, an inclination of inner wall 170 of main portion 158 can change to a first angle α relative to the centerline CL of guide tip 150. In embodiments, an inclination of outer wall 168 of inner body 160 can remain unchanged in funnel portion 172, though in other embodiments, outer wall 168 of inner body 160 can change inclination by a second angle β relative to the centerline CL of guide tip 150 at shift distance C. First angle α and second angle β can be equal (thereby creating parallel surfaces), but need not be. In any case, first angle α and second angle β can be selected so that dielectric fluid exits outlet end 166 of guide tip 150 at an angle θ, also referred to as an "angle of attack" of the exiting dielectric fluid, and with an inwardly oriented velocity component. Lower channel 156 in funnel portion 172 can therefore be frustoconical in embodiments and can have a channel thickness t defined between outer wall 168 of inner body 160 and inner wall 170 in funnel portion 172 and a channel spacing X defined by outer wall 168 of inner body 160. In the illustrated embodiment, the channel thickness t remains constant throughout the funnel portion 172, although, in other embodiments, the channel thickness t may vary (e.g., decrease toward the outlet end 166).

Funnel portion 172 of guide tip 150, and particularly lower channel 156, are thus configured to direct dielectric fluid toward a focal point F located at a standoff distance S away from end 166 of guide tip 150, for instance in that lower channel 156, in the funnel portion, is, in a direction towards the outlet end 166 of guide tip 150, inclined towards the common centerline CL of the quill and the guide tip, such as a standoff distance from work site 22. For instance, lower channel 156 may be ring-shaped in a cross-section of funnel portion 172 and more in particular circular ring shaped. A mean diameter of the ring-shaped cross section, i.e., an arithmetic mean value of the diameter of inner wall 170 of main portion 158 of guide tip 150, or outer body 165, respectively, and an outer wall 168 of inner body 160, decreases in a direction towards outlet end 166. Standoff distance S may be a setting of EDM apparatus 10. For example, EDM apparatus 10 may be set to remain a standoff distance of 0.25 inches away from workpiece 20. In embodiments, channel thickness t, channel spacing X, and angle of attack θ can be selected based on properties of electrode 18, such as an outer diameter of electrode 18. Channel thickness t, channel spacing X, and angle of attack θ can also be selected to provide a laminar flow of the dielectric fluid as it exits guide tip 150, which can provide more efficient removal of debris than non-laminar flow. Further, channel thickness t, channel spacing X, and angle of attack θ can also be selected to ensure the dielectric fluid is aimed at focal point F, which will be at work site 22 in embodiments. That is, channel thickness t, channel spacing X, and angle of attack θ can be selected to ensure that dielectric fluid in sufficient quantities arrives at standoff distance S, such as by directing the dielectric fluid at focal point F.

First and second angles α and β can be selected in embodiments to result in a desired angle of attack θ. In embodiments, for example, for an electrode having an outer diameter of 0.039 inches, a standoff distance S of 0.25 inches and a channel thickness t of 0.030 inches can be advantageous. In this example, an inner body wall thickness 180 of 0.020 inches at the end 166 and an inner body wall thickness 182 of 0.040 inches at the shift distance C were suitable given the materials used for guide tip 150 and inner body 160. Also in this example, an angle of attack θ of about 20° provided sufficiently laminar flow of dielectric fluid to work site 22. It should be noted that angle of attack θ, shift distance C, inner body wall thicknesses, outer body wall thicknesses, and channel spacing X can vary depending on electrode outer diameter as mentioned above.

Funnel portion 172 and lower channel 156 therein can effectively shape exiting dielectric fluid into a hollow cone, or alternatively a frustoconical section in embodiments, with a height of the standoff distance S, an outer diameter at its base approximately equal to the diameter of inner wall 170 of main portion 158 at end 166 (i.e., X + 2t, as labeled in FIG. 5), and an inner diameter at its base equal to about the diameter of outer wall 168 of inner body 160 at end 166 ("X" in FIG. 5). Inner and outer surfaces of the hollow cone of dielectric fluid can be separated by thickness t at least at end 166 of guide tip 150. In embodiments, inner and outer surface of the hollow cone can converge or remain spaced apart depending on the first and second angles α, β and as may be desired and/or suitable for a particular application.

Through flush guide 100 or portions thereof can be made using additive manufacturing ("AM"). In particular, guide tip 150 is suitable for fabrication using AM using resin, plastics, metals, such as sintered metal powder, or any other material compatible with dielectric fluid flushing and EDM. In addition, variants of guide tip 150, such as with different flow rates, standoff distances D, first and second angles α, β, angles of attack θ, channel thicknesses t, wall thicknesses, and other variables can be made and kept near EDM apparatus 10. Users can then swap one variant of guide tip 150 for another should a task require a guide tip 150 with different characteristics. Guide tips 150 may be provided with attachment mechanisms (e.g., threads) that facilitate easy engagement and removal from quill 104.

As noted herein, conventional approaches and systems for FHD EDM fail in at least one aspect, and in particular cases can experience reduced cutting progress during the near-breakthrough period. Relative to those conventional approaches and systems, various embodiments described herein enhance debris removal during FHD EDM by directing dielectric fluid at the work site 22 in a more concentrated or focused manner using aspects of through flushing and jet flushing. A guide tip 150 receives dielectric fluid from a quill 104 to which it is removably attached. The guide tip includes one or more channels that convey the dielectric fluid from the quill end of the guide tip to the work end of the guide tip. The channels are shaped to send the dielectric fluid at the work site more directly than prior art devices. In embodiments, for example, as particularly seen in FIG. 5, a channel 156 may be annular with a constant thickness and parallel to the surface of the quill 104 until a shift distance S from the work end 166 of the guide tip 150. In other embodiments, the channel thickness and/or orientation may vary. In any case, at the shift distance S, outer diameter OD of the channel 156 can decrease as the channel approaches the work end 166 of the guide tip 150. This reduction in outer diameter OD can impart an angle α to an outer wall of the channel 156 so that the dielectric fluid exits the work end 166 of the guide tip 150 at a desired angle θ. Over the shift distance S, an inner diameter of the channel 156 can remain unchanged or can also decrease as the channel approaches the work end 166 of the guide tip 150. In some embodiments, the thickness t of the channel can remain constant as a result of an appropriate decrease in the inner diameter ID, while in other embodiments, the thickness t can decrease, and in other embodiments the thickness t can increase.

It should be noted that the behavior of the cross-sectional area of the channel over shift distance S can affect delivery of the dielectric fluid. For example, if the cross-sectional area remains constant, speed of the dielectric fluid should remain unchanged, whereas if the cross-sectional area decreases, the dielectric fluid can accelerate as it travels through the channel 156, exiting at higher speed than the dielectric fluid possessed at shift distance S within the channel 156. If the channel cross-sectional area were to increase over the shift distance S, then dielectric fluid speed would decrease as it approached the end 166 of the guide tip 150. In various embodiments, the slope of the channel outer diameter OD, the slope of the channel inner diameter ID, the angle α, the angle θ, the thickness t, and the shift distance S are selected to deliver the dielectric fluid to the work site 22 for beneficial debris removal and cooling of the electrode 18 and workpiece 20.

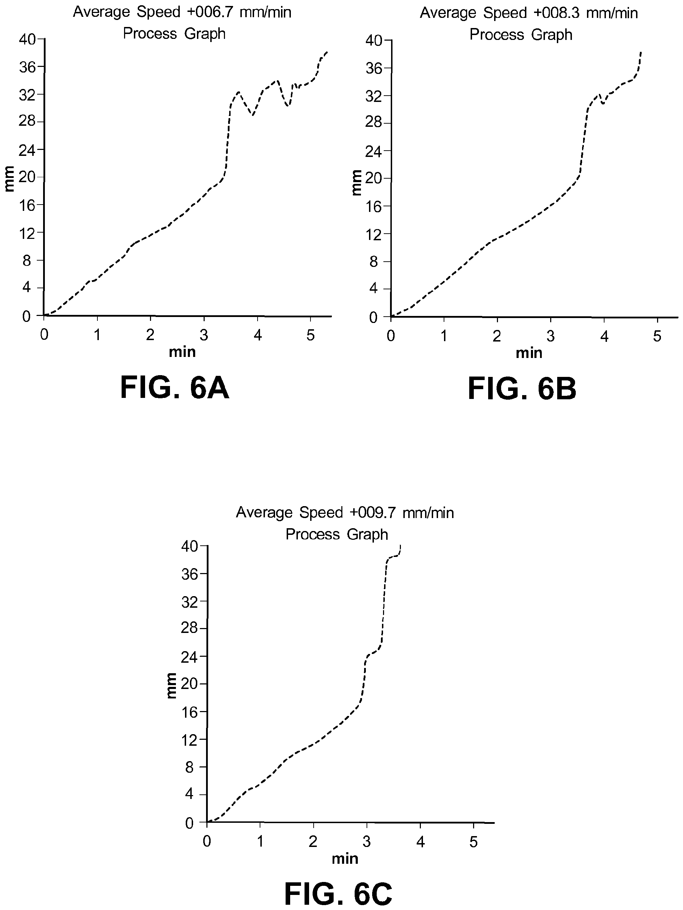

A comparison of the performance of conventional devices and a through flush guide 100 according to exemplary embodiments of the disclosure is seen in FIGS. 6A-6C using graphs of hole progress, which illustrate hole depth in millimeters vs. time in minutes. A common workpiece 20 and desired hole size was used in each trial illustrated in FIGS. 6A-6C. FIG. 6A shows hole progress using a conventional flush system in which dielectric fluid is delivered to the work site along an exterior of an electrode guide tube. As can be seen, progress becomes erratic shortly before 4 minutes, effectively indicating the onset of pre-breakthrough (PBT) and illustrating a means of pre-breakthrough detection (PBTD). As can be seen in FIG. 6A, the along-the-tube flush makes no progress for 2 minutes before continuing toward breakthrough (BT) and completion of the hole. FIG. 6B shows hole progress using a conventional through flush guide, and while it demonstrates a reduced period of erratic behavior, it still has little to no progress for about a minute. FIG. 6C shows hole progress using embodiments as disclosed herein, and clearly shows near elimination of the erratic pre-breakthrough behavior of the conventional arrangements. In addition, time to pre-breakthrough is reduced be nearly a minute, and time to completion of the hole is reduced by as much as over two minutes, from 6+ minutes using exterior tube flush to about 3.5 minutes using the through flush guide according to embodiments as disclosed herein. Thus, a technical effect of embodiments of the disclosure is to improve FHD EDM performance by more completely directing dielectric fluid with guide tip 150 into work site 22, thereby increasing debris removal and reducing hole completion time.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" or "about," as applied to a particular value of a range, applies to both end values and, unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. The embodiments were chosen and described in order to best explain the principles of the disclosure and the practical application of such technology and to enable others of ordinary skill in the art to understand the various embodiments of the present disclosure and the possibility of various modifications of the disclosed embodiments, as may be suited to the particular use(s) contemplated.

## Claims

1. A through flush guide (100) for fast hole drilling electrical discharge machining, comprising:
a guide body (102);
a quill (104) having a hollow body (105), the quill having a first end and a second end opposite the first end, wherein the first end is mounted on the guide body (102) and is configured to receive and convey an electrode (18) of the EDM apparatus, and wherein the quill (104) is configured to receive and convey dielectric fluid from the first end of the quill to the second end of the quill; and
a guide tip (150) on the second end of the quill, wherein the quill (104) and the guide tip (150) have a common centerline (CL), the guide tip including an electrode passage (108) of the guide tip defined along the common centerline and a lower channel (156) providing a dielectric fluid passage of the guide tip (150) defined around the electrode passage, wherein in a funnel portion (172) of the guide tip the lower channel (156) is configured to direct dielectric fluid toward a focal point (F) located at a standoff distance (S) away from an outlet end (166) of the guide tip.

2. The through flush guide of claim 1, wherein the guide tip (150) has a main portion (158) with an inner wall (170) and an inner body (160), wherein the electrode passage (108) of the guide tip is defined along a center of the inner body, and the lower channel (156) providing the dielectric fluid passage of the guide tip is defined between an outer wall (168) of the inner body (160) and the inner wall (170) of the main portion (158).

3. The through flush guide of claim 2, wherein the funnel portion (172), in a direction towards the outlet end (166) of the guide tip, begins a shift distance (C) away from the outlet end (166) of the guide tip, and wherein an inclination of the inner wall (170) of the main portion (158) changes to a first angle (α) relative to the common centerline centerline (CL) of the guide tip and the quill at the shift distance.

4. The through flush guide of any of claims 2 or 3, wherein the funnel portion (172), in a direction towards the outlet end (166) of the guide tip, begins a shift distance (C) away from the outlet end (166) of the guide tip, and wherein an inclination of the outer wall (168) of the inner body (160) changes to a second angle (β) relative to the centerline of the guide tip at the shift distance.

5. The through flush guide of claim 4 when dependent upon claim 3, wherein the second angle and the first angle are equal.

6. The through flush guide of any preceding claim, wherein the lower channel (156) providing the dielectric fluid passage of the guide tip is frustoconical in the funnel portion.

7. The through flush guide of any preceding claim, wherein the lower channel (156) providing the dielectric fluid passage of the guide tip is, in a direction towards the outlet end (166) of the guide tip (150), inclined towards the common centerline (CL) of the quill and the guide tip in the funnel portion (172) of the guide tip.

8. The through flush guide of any preceding claim, further comprising an electrode guide tube (118) within and concentric with the quill (104), wherein the electrode guide tube is configured to receive an electrode (18).

9. The through flush guide of any preceding claim, wherein the guide body (102) is configured for attachment to an electrical discharge machining apparatus (10).

10. The through flush guide of any preceding claim, wherein the guide body (102) comprises a mounting end configured for attachment to an electrical discharge machining apparatus and a distal end opposite the mounting end.

11. The through flush guide of claim 2 or of any of claims 1 through 10 when dependent upon claim 2, further comprising a plurality of supports (164) extending between the outer wall (168) of the inner body (160) and the inner wall (170) of the main portion (158).

12. The through flush guide of any preceding claim, wherein a dielectric fluid passage (106) of the guide body is defined in and extending through the guide body (102).

13. The through flush guide of the preceding claim, wherein the dielectric fluid passage (106) of the guide body includes a connection configured to deliver dielectric fluid to an interior of an electrode.

14. An electrical discharge machining apparatus (10), comprising:
a work platform (14);
a mast (12) extending above the work platform;
an electrode feed system (16);
a dielectric fluid supply (24); and
a through flush guide (100) according to any preceding claim attached to the mast (12).
